## Europäisches Patentamt
## European Patent Office
## Office européen des brevets

(19)

(11) **EP 1 309 183 A2**

(12) **DEMANDE DE BREVET EUROPEEN**

(43) Date de publication:
**07.05.2003 Bulletin 2003/19**

(51) Int Cl.⁷: **H04N 5/10**

(21) Numéro de dépôt: **02292647.1**

(22) Date de dépôt: **24.10.2002**

(84) Etats contractants désignés:
**AT BE BG CH CY CZ DE DK EE ES FI FR GB GR IE IT LI LU MC NL PT SE SK TR**
Etats d'extension désignés:
**AL LT LV MK RO SI**

(30) Priorité: **30.10.2001 FR 0114058**

(71) Demandeur: **STMicroelectronics S.A.**
**92120 Montrouge (FR)**

(72) Inventeurs:
• **Coste, Diego**
 **38760 Varces (FR)**

• **Materic, Ilija**
 **38000 Grenoble (FR)**
• **Besson, Francois**
 **38240 Meylan (FR)**
• **Maffini, Hervé**
 **38300 Saint-Martin-D'Hères (FR)**

(74) Mandataire: **Casalonga, Axel**
 **BUREAU D.A. CASALONGA - JOSSE**
 **Paul-Heyse-Strasse 33**
 **80336 München (DE)**

(54) **Procédé et dispositif de détection de la parité des trames successives d'un signal vidéo entrelacé**

(57) On détermine respectivement les valeurs successives de la phase horizontale du signal un nombre entier prédéterminé de lignes vidéo après les occurrences successives des impulsions de synchronisation verticale. On met à jour les valeurs successives d'un bit de parité (F) en fonction des valeurs successives de la phase horizontale, et on fournit des indications (FA,$\overline{FA}$) sur la parité des trames à partir des valeurs successives du bit de parité.

FIG.3

**Description**

L'invention concerne le traitement d'un signal vidéo entrelacé, et plus particulièrement la détection de la parité des trames successives de ce signal vidéo.

La parité des trames est ce qui permet d'entrelacer des lignes lors de l'affichage. La ligne 1 commence ainsi en haut à gauche de l'écran et la ligne 313 (pour une fréquence de balayage de 50 Hz) ou la ligne 266,5 (pour une fréquence de balayage de 60 Hz) commence en haut et au milieu de l'écran. Par ailleurs pour un signal entrelacé, la parité des trames change à chaque trame.

Jusqu'à maintenant, dans les circuits analogiques, la parité était toujours naturellement gérée par la simple position des impulsions («tops») de synchronisation verticale, ceux-ci survenant soit en début de ligne soit en milieu de ligne. Il n'est donc pas nécessaire d'expliciter la parité, le signal de synchronisation verticale déclenchant directement le retour du spot en haut de l'écran.

Mais il apparaît désormais nécessaire de transcrire le flux vidéo analogique traditionnel en un flux numérique semblable à celui fourni par les nouvelles sources d'images (DVD, diffusion numérique terrestre par câble, ou par satellite). Ceci permet en effet une extension des fonctionnalités offertes par les téléviseurs, de même qu'une meilleure intégration génératrice d'économies.

Cependant, selon la norme régissant cette transcription numérique des images vidéo, la synchronisation verticale n'est plus assurée de la même manière. C'est désormais le basculement d'un bit décrivant la parité qui entraîne la remontée du spot en haut de l'écran.

Ainsi, avec une fréquence de balayage de 50 Hz (systèmes PAL et SECAM) ce bit de parité vaut 0 pour les lignes 1 à 312 et 1 pour les lignes 313 à 625. Pour une fréquence de balayage de 60 Hz (système NTSC notamment) ce bit vaut 0 pour les lignes 4 à 265 et 1 pour les lignes 266 à 3.

Il est donc important d'exprimer la parité avec exactitude et la seule position des tops de synchronisation verticale revêt moins d'importance.

En effet, si l'on venait à se tromper dans la parité d'une trame, cela entraînerait le non-basculement du bit de parité entre cette trame et les trames précédente et suivante. Ce non-basculement peut s'avérer très préjudiciable car il influe directement sur le fonctionnement des récepteurs de signal numérique. En effet, ceux-ci passent alors en recherche de basculement, ce qui se traduit par une image semblant tourner à l'écran (défilement rapide vertical).

Cependant, cette détermination est particulièrement difficile dans le cas des signaux bruités et des signaux issus de magnétoscopes. En effet, dans le premier cas, on est en présence de tops de synchronisation verticale assez perturbés, ce qui vient modifier l'instant auquel on détermine la présence de cette synchronisation verticale. Or la parité dépend uniquement de la position de la synchronisation verticale par rapport à la phase horizontale. Il en résulte donc un risque important d'erreur.

Pour les magnétoscopes, le problème est inverse. En effet, les signaux ne présentent généralement pas beaucoup de bruit, la position de la synchronisation verticale est assez bien déterminée. En revanche, la phase de la boucle à verrouillage de phase par rapport à celle du signal vidéo peut avoir été faussée dans de grandes proportions en raison de la présence de sauts de phase quelques lignes à peine avant l'apparition de la synchronisation verticale. Dans ces conditions, la relation « top de synchronisation verticale-phase horizontale » est alors à nouveau faussée et il y a un risque d'inversion de parité.

L'invention vise à apporter une solution plus satisfaisante à ce problème de détection de la parité en particulier dans les applications de transmission numérique de signaux vidéo.

L'invention propose donc un procédé de détection de parité des trames successives d'un signal vidéo entrelacé, procédé dans lequel on détermine respectivement les valeurs successives de la phase horizontale du signal, un nombre entier prédéterminé n de lignes vidéo après les occurrences successives des impulsions de synchronisation verticale. Par ailleurs, on met à jour les valeurs successives d'un bit de parité en fonction des valeurs successives de la phase horizontale et on fournit les indications sur la parité des trames à partir des valeurs successives du bit de parité.

En d'autres termes, selon l'invention, on relève la phase horizontale non pas au moment du top de synchronisation verticale mais un certain nombre entier de lignes plus tard. Ce nombre n doit être suffisant pour que la boucle à verrouillage de phase ait pu rétablir une relation de phase horizontale correcte avec le signal d'entrée. La comparaison regagne alors toute la fiabilité qu'elle avait perdue en raison d'un saut de phase éventuel en fin de trame qui peut se produire en particulier lorsque la source du signal vidéo est un magnétoscope.

Cependant, ce nombre entier prédéterminé n de lignes ne doit pas être trop important. En effet, si la source vidéo est un magnétoscope et si celui-ci n'est pas en lecture normale, il peut se produire alors, en plus du saut de phase systématique en fin de trame, plusieurs autres sauts de phases espacés de quelques dizaines de lignes à peine, ce qui risque de modifier à nouveau la phase avant qu'on en ait fait le relevé.

En pratique, l'homme du métier saura ajuster ce nombre n en fonction de ces applications. Ceci étant, on pourra choisir un nombre n compris entre environ 10 et environ 50, par exemple 16 ou 32.

Selon un mode de mise en oeuvre préférentiel de l'invention, permettant notamment de mieux prendre en compte le cas de signaux bruités, on utilise un bit de parité dit arbitraire, qui est un signal binaire basculant à chaque début de trame.

Plus précisément, selon ce mode de mise en oeuvre, on change la valeur courante du bit de parité arbitraire à chaque occurrence d'une impulsion de synchronisation verticale. On compare la valeur courante du bit de parité arbitraire avec la valeur du bit de parité déterminée à la trame précédente et on incrémente ou on décrémente la valeur d'un compteur signé dit de « parité » (qui avait été initialisé par exemple à 0) en fonction de ladite comparaison.

Par ailleurs, l'indication de la parité de la trame courante est la valeur courante du bit de parité arbitraire ou bien la valeur courante complémentée de ce bit de parité arbitraire en fonction du signe de la valeur courante du compteur de parité.

En pratique, on peut fixer une valeur positive de butée de comptage et une valeur négative de butée de comptage pour le compteur de parité. Ainsi , lorsque le compteur de parité atteint sa valeur négative de butée de comptage, une nouvelle commande de décrémentation se traduit par une non-modification de la valeur de compteur, tandis que lorsque le compteur atteint sa valeur positive de butée de comptage, une nouvelle commande d'incrémentation se traduit pas une non-modification de la valeur du compteur.

Ainsi, selon ce mode de mise en oeuvre, on obtient en sortie des valeurs de la parité bien plus fiables que celles directement issues de la détection, notamment dans le cas des signaux bruités. En effet, il suffit que la détection soit fausse moins d'une fois sur deux pour que le compteur approche de l'une de ces butées et ne change jamais de signe, ce qui amène la disparition complète des erreurs en sortie.

Par ailleurs, on réinitialise avantageusement la valeur du compteur à 0 à chaque perte de synchronisation verticale. Et, la première détection qui suit le retour de la synchronisation verticale va alors ramener le compteur soit à 1 soit à -1, ce qui se traduit par une réponse immédiate du point de vue du signe.

Par ailleurs l'initialisation du compteur signé de parité à la valeur 0, ne confère quasiment aucune inertie au système au démarrage, par rapport à une initialisation à une valeur élevée qui, s'il s'avérait qu'elle ne correspondait pas à la réalité, conduirait à attendre un certain nombre de cycles avant que le compteur ne prenne le bon signe. En revanche, selon l'invention, l'inertie que l'on obtient lorsque le compteur a atteint une valeur de butée , est un avantage pour la fiabilité de l'indication de parité fournie, même si la détection souffre de quelques erreurs.

L'invention a également pour objet un dispositif de détection de la parité des trames successives d'un signal vidéo entrelacé.

Selon une caractéristique générale de l'invention, ce dispositif comprend :

- des moyens de comptabilisation aptes à comptabiliser un nombre entier prédéterminé de lignes vidéo après chaque occurrence d'une impulsion de synchronisation verticale et à délivrer un signal de fin de comptabilisation,

- des moyens de détermination aptes à déterminer respectivement les valeurs successives de la phase horizontale du signal, lors des délivrances successives du signal de fin de comptabilisation,

- un premier registre contenant un bit de parité,

- des moyens de mise à jour aptes à mettre à jour les valeurs successives du bit de parité en fonction des valeurs successives de la phase horizontale, et

- des moyens de traitement aptes à fournir des indications sur la parité des trames à partir des valeurs successives du bit de parité.

Selon un mode de réalisation de l'invention, les moyens de traitement comportent :

- un compteur signé de parité initialisable à la valeur zéro,

- un deuxième registre apte à contenir un bit de parité arbitraire,

- des moyens aptes à changer la valeur courante du bit de parité arbitraire à chaque occurrence d'une impulsion de synchronisation verticale,

- des moyens de comparaison aptes à comparer la valeur courante du bit de parité arbitraire avec la valeur du bit de parité déterminée à la trame précédente, et

- des moyens de commande aptes à incrémenter ou à décrémenter la valeur du compteur de parité en fonction de ladite comparaison, l'indication de parité de la trame courante étant la valeur courante du bit de parité arbitraire ou bien la valeur courante complémentée de ce bit de parité arbitraire en fonction du signe de la valeur courante du compteur de parité.

Selon un mode de réalisation de l'invention, le compteur de parité possède une valeur positive de butée de comptage et une valeur négative de butée de comptage. Lorsque le compteur atteint sa valeur négative de butée de comptage, les moyens de commande ne modifient pas la valeur du compteur en présence d'une nouvelle commande de décrémentation, tandis que lorsque le compteur atteint sa valeur positive de butée de comptage, les moyens de commande ne modifient pas la valeur du compteur en présence d'une nouvelle commande d'incrémentation.

Les moyens de commande réinitialisent avantageusement la valeur du compteur de parité à 0 à chaque perte de synchronisation verticale.

Par ailleurs, selon un mode de réalisation de l'invention, les moyens de comptabilisation qui vont comptabiliser le nombre prédéterminé de lignes , comportent un compteur incrémenté au rythme d'un signal d'horloge, le signal de fin de comptabilisation étant délivré lorsque le compteur atteint une valeur de comptage correspondant au produit dudit nombre entier prédéterminé de lignes vidéo n par la durée moyenne d'une ligne vidéo contenue dans le filtre de boucle d'une boucle à verrouillage de phase numérique utilisée pour la synchronisation horizontale.

L'invention a également pour objet un circuit intégré comportant un dispositif de détection tel que défini ci avant.

D'autres avantages et caractéristiques de l'invention apparaîtront à l'examen de la description détaillée de modes de réalisation et de mise en oeuvre, nullement limitatifs, et des dessins annexés sur lesquels :

- la figure 1 est un synoptique schématique d'un mode de réalisation d'un dispositif de détection selon l'invention,
- la figure 2 illustre un mode de mise en oeuvre d'une mise à jour d'un bit de parité à partir d'une mesure retardée de la phase horizontale,
- la figure 3 est un organigramme schématique d'un mode de mise en oeuvre du procédé selon l'invention, et
- la figure 4 illustre schématiquement une variante de réalisation de moyens de synchronisation horizontale qui peuvent être combinés au sein d'un même circuit vidéo avec un dispositif de gestion de parité selon l'invention.

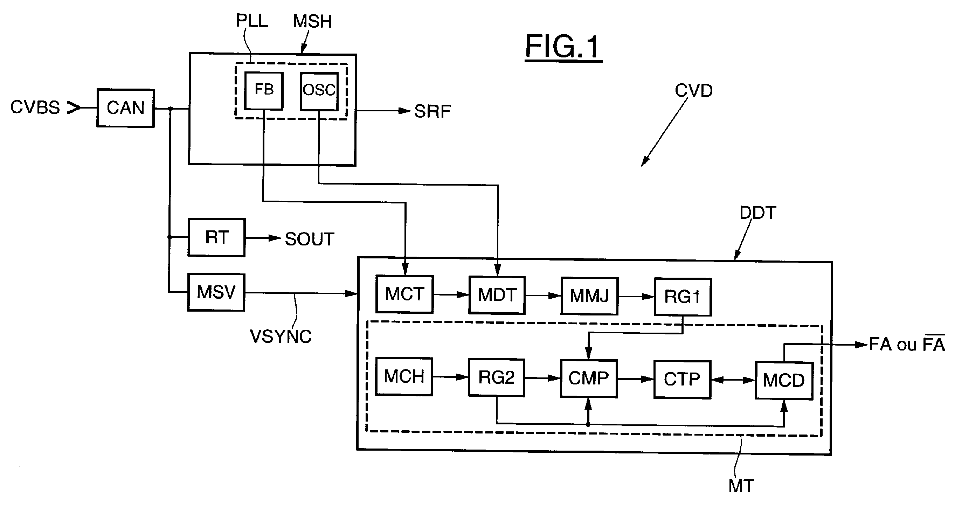

Sur la figure 1, la référence CVBS désigne un signal vidéo entrelacé analogique émanant d'une source vidéo.

Le circuit vidéo CVD qui reçoit le signal analogique CVBS, et qui peut être par exemple réalisé sous forme d'un circuit intégré sur une pastille de silicium, comporte d'une part des moyens de synchronisation horizontale MSH, qui peuvent être de structure et de fonctionnement connus en soi. Plus précisément, ces moyens de synchronisation horizontale comportent notamment une boucle numérique à verrouillage de phase PLL délivrant un signal de référence SRF issu d'un oscillateur de boucle commandable OSC. Comme il est classique en la matière, ce signal de référence SRF est le signal de sortie des moyens de synchronisation horizontale MSH, et va être synchronisé sur le signal vidéo. En d'autres termes, après synchronisation et en régime établi, les transitions du signal SRF correspondent aux impulsions de synchronisation horizontale contenues dans le signal vidéo.

Le signal SRF est, par ailleurs, rebouclé sur le comparateur de phase de la boucle PLL. L'oscillateur OSC est commandé, via le filtre de boucle FB (par exemple du type proportionnel intégral), par un signal d'erreur représentatif de l'écart de phase entre le signal vidéo CVBS numérisé et le signal SRF.

La fréquence d'échantillonnage appliquée dans les moyens de synchronisation horizontale MSH est par exemple de l'ordre de 27 Mhz correspondant à une horloge d'échantillonnage dont les fronts montants sont espacés de 37 nanosecondes.

Dans l'exemple qui est décrit ici, l'oscillateur OSC est alors, par exemple, un compteur cyclique incrémenté au rythme du signal d'horloge d'échantillonnage et dont la valeur finale de comptage nominale est par exemple égale à 1727, ce qui correspondant à une longueur de ligne vidéo de 64 microsecondes. Bien entendu, la valeur finale de comptage de ce compteur cyclique peut varier autour de la valeur nominale de façon à pouvoir permettre la synchronisation sur le signal vidéo CVBS.

Outre les moyens de synchronisation horizontale MSH, le circuit vidéo CVD comporte des moyens de détection DDT, aptes à détecter la parité des trames successives du signal vidéo.

Ces moyens DDT, dont on reviendra plus en détail ci-après sur la structure et la fonction, reçoivent notamment un signal VSYNC représentatif de l'occurrence d'une impulsion de synchronisation verticale. Ce signal VSYNC est émis par des moyens de synchronisation verticale MSV de structure classique et connue en soi. Ces moyens MSV reçoivent le signal vidéo CVBS numérisé après passage dans un convertisseur analogique numérique CAN.

Par ailleurs, la référence SOUT désigne le signal vidéo numérisé et retardé d'un retard correspondant à une ligne vidéo après passage dans des moyens de retard RT. Ceci permet de prendre en compte le retard dans l'élaboration du signal VSYNC et de faire coïncider l'indication de parité élaborée, avec la sortie vidéo SOUT.

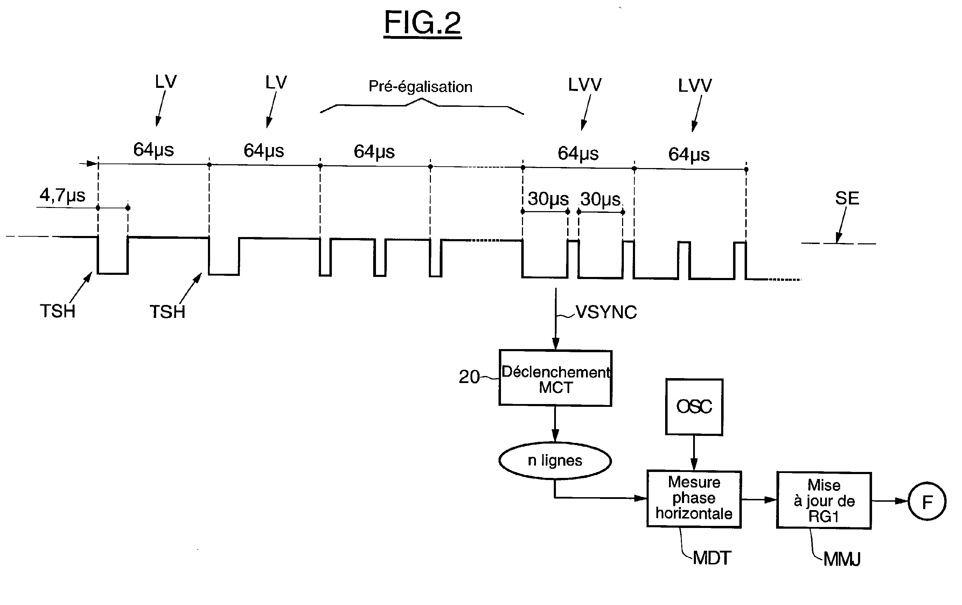

On va maintenant se référer également à la figure 2 pour décrire la structure et le fonctionnement des moyens de détection DDT.

Sur la partie haute de la figure 2, on a représenté très schématiquement plusieurs lignes vidéo du signal vidéo CVBS. Dans l'exemple décrit, toutes les lignes vidéo ont une longueur de 64 microsecondes.

Plus précisément, comme il est connu par l'homme du métier, les lignes vidéo peuvent présenter différentes configurations. Ainsi, une ligne vidéo LV, située par exemple en milieu de trame, débute par une impulsion de synchronisation horizontale (top de synchronisation horizontale) TSH. Cette impulsion TSH s'étend par exemple sur 4,7 microsecondes et a un niveau qui est inférieur au niveau de noir SE.

Puis, en fin de trame, le signal CVBS comporte une série de lignes vidéo formant une pré-égalisation. Les impulsions de ces lignes vidéo sont plus courtes et plus nombreuses que les impulsions TSH.

Puis, le signal CVBS comporte plusieurs lignes vidéo LVV indiquant le changement de trame. Plus précisément, chaque ligne LVV comporte deux impulsions s'étendant respectivement sur environ 30 microsecondes. La détection de ces lignes vidéo LVV va permettre aux moyens de synchronisation verticale MSV de délivrer le signal VSYNC.

À partir de cet instant, des moyens de comptabilisation MCT vont être déclenchés (étape 20, figure 2).

Ces moyens de comptabilisation MCT vont comptabiliser un nombre n prédéterminé de lignes vidéo, par exemple 16 lignes vidéo.

Matériellement, ces moyens de comptabilisation MCT peuvent comporter un compteur incrémenté au rythme du signal d'horloge d'échantillonnage. Le signal de fin de comptabilisation est délivré lorsque le compteur atteint une valeur de comptage correspondant au produit du nombre n par la durée moyenne d'une ligne vidéo, durée qui est par exemple contenue dans le filtre de boucle FB de la boucle à verrouillage de phase numérique PLL.

Lorsque le compteur a délivré son signal de fin de comptage, des moyens de détermination MDT vont alors déterminer la valeur de la phase horizontale du signal vidéo. Pour se faire, les moyens MDT vont examiner la valeur du compteur cyclique formant l'oscillateur de boucle OSC pour déterminer si la phase horizontale se situe entre 1/4 et 3/4 ou dans l'autre moitié. Plus précisément, en l'espèce, les moyens MDT vont examiner si la valeur du compteur formant l'oscillateur OSC se situe entre 0 et 1/4 de la limite de comptage ou entre 3/4 de la limite de comptage et la limite de comptage d'une part, ou bien entre 1/4 de la limite de comptage et 3/4 de la limite de comptage d'autre part.

En fonction du résultat de cette comparaison, des moyens de mise à jour MMJ vont mettre à jour la valeur d'un bit de parité F contenu dans un premier registre RG1.

Plus précisément, si la valeur du compteur se situe entre 1/4 de la limite de comptage et 3/4 de la limite de comptage, on attribuera par exemple la valeur 1 au bit de parité F et la valeur 0 sinon.

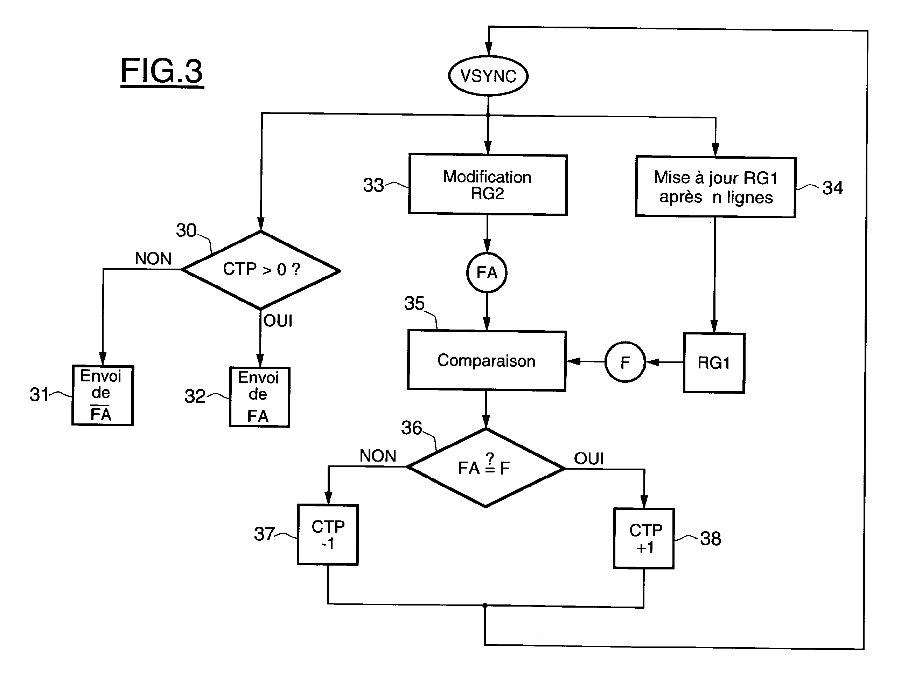

On va maintenant se référer plus particulièrement à la figure 3 pour décrire un mode de mise en oeuvre du procédé selon l'invention permettant la délivrance par des moyens de traitement MT (figure 1), d'une indication sur la parité de la trame courante.

D'une façon générale, cette indication de la parité de la trame courante est la valeur courante d'un bit de parité arbitraire FA ou bien la valeur courante complémentée $\overline{FA}$ de ce bit de parité arbitraire.

Plus précisément, des moyens de commande MCD vont délivrer soit le bit de parité arbitraire FA (étape 32) ou bien le bit de parité $\overline{FA}$ (étape 31) en fonction du signe du contenu d'un compteur de parité CTP.

Ainsi, si le signe du compteur CTP est positif (étape 30) c'est le bit de parité FA qui est délivré. Tandis que si le signe du compteur est négatif c'est le bit complémenté $\overline{FA}$ qui est délivré.

Ainsi, dès l'occurrence du signal VSYNC, une indication de la parité de la trame courante est délivrée.

Parallèlement à cette délivrance, des moyens MCH vont modifier (étape 33) la valeur du bit de parité arbitraire FA contenu dans un deuxième registre RG2, et ce pour chaque occurrence d'une nouvelle trame, c'est-à-dire à chaque occurrence du signal VSYNC.

Des moyens de comparaison CMP vont alors comparer (étape 35) la valeur du bit parité arbitraire FA contenu dans le deuxième registre RG2 avec la valeur du bit de parité F contenu dans le registre RG1 et correspondant à la trame précédente. Si les deux bits de parité FA et F sont identiques (étape 36) les moyens de commande MCD vont incrémenter le compteur de parité CTP (étape 38).

Dans le cas contraire, les moyens de commande vont décrémenter le compteur CTP (étape 37).

Dans le cas où le compteur de parité CTP possède une valeur de butée positive et une valeur de butée négative, une commande d'une nouvelle incrémentation lorsque le compteur CTP a atteint sa valeur de butée positive se traduit par une non modification de ce compteur tandis qu'une commande d'une nouvelle décrémentation lorsque le compteur CTP a atteint sa valeur de butée négative se traduit également par une non modification du compteur.

Parallèlement à cette misé à jour de la valeur du compteur de parité CTP, le premier registre RG1 est mis à jour (étape 34) après n lignes vidéo, comme indiqué ci avant. À ce moment-là, le premier registre RG1 contient la valeur du bit de parité F associé à la trame courante et qui sera utilisé pour la comparaison avec le bit de parité FA lors de la trame suivante.

En d'autres termes, selon l'invention, à chaque nouvelle trame, on compare la valeur du bit FA à la valeur du bit F associé à la trame précédente. Si ces deux bits sont identiques, on incrémente le compteur CTP sinon on le décrémente. Ce compteur, qui est initialisé à 0, est également réinitialisé 0 lorsque l'on perd la synchronisation verticale.

Lorsque ce compteur CTP indique des valeurs positives, on déduit que la parité arbitraire est en phase avec la parité de la trame précédente et inversement lorsque les valeurs sont négatives.

La parité qui est alors envoyée dans le flux numérique en sortie du dispositif DDT, n'est plus la parité détectée mais soit la parité arbitraire FA (si le compteur est positif) soit l'inverse $\overline{FA}$ de cette parité arbitraire (si le compteur est négatif), cette parité arbitraire étant plus fiable que la parité détectée.

L'invention n'est pas limitée aux modes de réalisation et de mise en oeuvre qui viennent d'être décrits mais en embrasse toutes les variantes.

Ainsi, l'invention est compatible avec une synchronisation horizontale telle que celle décrite dans la demande de brevet français n° 01 13905.

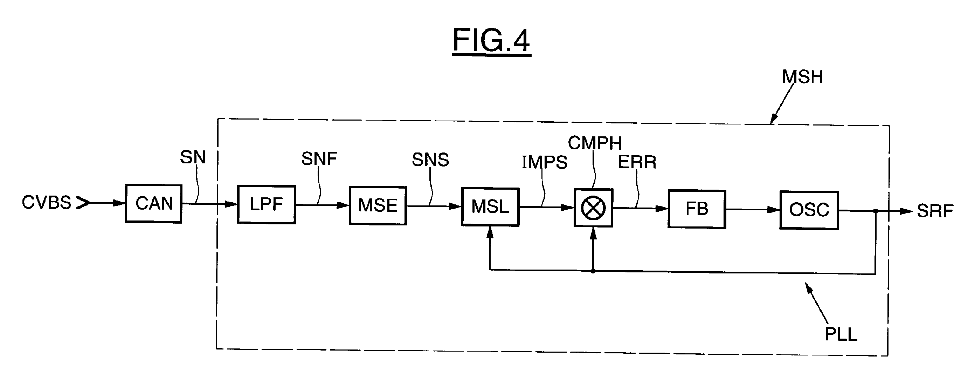

Plus précisément, si l'on se réfère à la figure 4, la détection de chaque impulsion de synchronisation horizontale comporte un échantillonnage du signal vidéo, un filtrage passe-bas du signal échantillonné SN, un seuillage du signal filtré SNF de façon à ne laisser subsister que des impulsions dont le niveau est inférieur à un seuil, et une sélection en fonction d'un critère de sélection prédéterminé, parmi les impulsions résiduelles situées à l'intérieur d'une fenêtre d'observation centrée sur une transition du signal de référence, de celle (IMPS) qui correspond à ladite impulsion de synchronisation horizontale.

En d'autres termes, selon cette variante de mise en oeuvre, on analyse tous les tops générés après seuillage et on les classe suivant leur niveau de vraisemblance. Le top ayant le maximum de vraisemblance est alors sélectionné pour mettre à jour la commande de l'oscillateur de la boucle.

Plusieurs critères de sélection peuvent être envisagés.

Le critère de sélection peut comporter par exemple un critère de dimension par rapport à une dimension moyenne (largeur moyenne) d'une impulsion de synchronisation horizontale.

Ainsi, à titre indicatif, on peut éliminer toutes les impulsions résiduelles dont la largeur est inférieure à un pourcentage prédéterminé de la largeur moyenne d'une impulsion de synchronisation horizontale.

Une fois cette élimination effectuée, on peut alors par exemple sélectionner l'impulsion résiduelle dont la largeur se rapproche le plus de ladite largeur moyenne.

Le critère de sélection peut comporter un critère de position par rapport à la position attendue de l'impulsion de synchronisation horizontale.

Plus précisément, dans ce cas, la position attendue de l'impulsion de synchronisation horizontale est celle de la transition du signal de référence. On détermine alors l'écart temporel entre chaque impulsion résiduelle et la transition du signal de référence, et on sélectionne celle qui est affectée de l'écart temporel le plus faible.

Le critère de sélection peut combiner les deux critères précédemment mentionnés, c'est-à-dire le critère de position et le critère de dimensionnement.

Ainsi, par exemple, on élimine toutes les impulsions résiduelles dont la largeur est inférieure à un pourcentage prédéterminé de la largeur moyenne d'une impulsion de synchronisation horizontale et on affecte à chaque impulsion résiduelle non éliminée une première note en fonction de sa largeur, la première note la plus élevée correspondant par exemple à une impulsion dont la largeur est égale à ladite largeur moyenne.

Par ailleurs, on détermine l'écart temporel entre chaque impulsion résiduelle non éliminée et la transition du signal de référence. On affecte alors une deuxième note à chaque impulsion résiduelle non éliminée, la deuxième note la plus élevée correspondant par exemple à une impulsion affectée d'un écart temporel nul.

On affecte ensuite à chaque impulsion résiduelle non éliminée une note finale résultant d'une pondération prédéterminée entre ladite première note et ladite deuxième note.

On sélectionne alors l'impulsion résiduelle affectée de la note finale la plus élevée.

La pondération peut évoluer en fonction des applications pour s'adapter notamment aux différents types de source vidéo ainsi qu'à la qualité de ce signal vidéo. Ainsi, en présence d'un bruit important, on favorisera le critère de position par rapport au critère de dimension tandis qu'en présence d'un bruit peu important, on favorisera le critère de dimension par rapport au critère de positionnement. De même, lorsque la source vidéo est par exemple un magnétoscope, ce qui conduit très probablement à un saut de phase en fin de trame, on favorisera à ce moment-là la largeur des impulsions de synchronisation par rapport à leur position.

Matériellement le circuit vidéo CVD selon l'invention peut comporter sur la même puce de silicium, les moyens de synchronisation horizontale MSH illustrés sur la figure 4.

Ainsi, le convertisseur analogique numérique CAN est suivi d'un filtre passe-bas LPF. La fréquence de coupure de ce filtre passe-bas est typiquement comprise entre 200 kHz et 2 MHz, et de préférence comprise entre 500 kHz et 1 MHz. Un tel filtre permet d'éliminer une bonne partie du bruit et de la sous-porteuse de chrominance.

Le signal échantillonné filtré SNF est ensuite délivré à des moyens de seuillage MSE. Ceux-ci effectuent un seuillage du signal de façon à éliminer toute partie du signal SNF dont le niveau se situe au-dessus d'un seuil. Ce seuil est par exemple de l'ordre de 50% de l'amplitude moyenne mesurée d'un top de synchronisation horizontale. Le signal numérique seuillé SNS comporte par conséquent des impulsions résiduelles qui sont considérées comme étant des impulsions de synchronisation horizontale potentielles.

Des moyens de sélection MSL vont alors sélectionner une impulsion IMPS qui sera considérée comme étant l'impulsion de synchronisation horizontale. Cette impulsion IMPS va alors être délivrée à la boucle à verrouillage de phase PLL comportant le comparateur de phase CMPH suivi du filtre de boucle FB et de l'oscillateur commandable OSC délivrant le signal de référence SRF.

Ce signal SRF est par ailleurs rebouclé sur le comparateur de phase CMPH et également sur les moyens de sélection afin de permettre la sélection selon un critère prédéterminé.

L'oscillateur est donc dans cette variante , commandé via le filtre de boucle FB, par le signal d'erreur ERR représentatif de l'écart de phase entre l'impulsion sélectionnée IMPS et une transition du signal SRF.

## Revendications

**1.** Procédé de détection de la parité des trames successives d'un signal vidéo entrelacé, **caractérisé par le fait qu'**on détermine respectivement les valeurs successives de la phase horizontale du signal

un nombre entier prédéterminé de lignes vidéo après les occurrences successives des impulsions de synchronisation verticale, **par le fait qu'**on met à jour les valeurs successives d'un bit de parité (F) en fonction des valeurs successives de la phase horizontale, et **par le fait qu'**on fournit des indications (FA,$\overline{\text{FA}}$) sur la parité des trames à partir des valeurs successives du bit de parité.

2. Procédé selon la revendication 1, **caractérisé par le fait qu'**on initialise à zéro la valeur d'un compteur de parité (CTP), **par le fait qu'**on change la valeur courante d'un bit de parité arbitraire (FA) à chaque occurrence d'une impulsion de synchronisation verticale, on compare la valeur courante du bit de parité arbitraire (FA) avec la valeur du bit de parité (F) déterminée à la trame précédente (R), et on incrémente ou on décrémente la valeur du compteur de parité (CTP) en fonction de ladite comparaison, et **par le fait que** l'indication de parité de la trame courante est la valeur courante du bit de parité arbitraire (FA) ou bien la valeur courante complémentée ($\overline{\text{FA}}$) de ce bit de parité arbitraire en fonction du signe de la valeur courante du compteur de parité.

3. Procédé selon la revendication 2, **caractérisé par le fait qu'**on fixe une valeur positive de butée de comptage et une valeur négative de butée de comptage pour le compteur de parité, et **par le fait que** lorsque le compteur de parité (CTP) atteint sa valeur négative de butée de comptage, une commande de décrémentation se traduit par une non modification de la valeur du compteur de parité, tandis que lorsque le compteur de parité atteint sa valeur positive de butée de comptage, une commande d'incrémentation se traduit par une non modification de la valeur du compteur de parité.

4. Procédé selon la revendication 2 ou 3, **caractérisé par le fait qu'**on réinitialise la valeur du compteur de parité (CTP) à zéro à chaque perte de synchronisation verticale.

5. Dispositif de détection de la parité des trames successives d'un signal vidéo entrelacé, **caractérisé par le fait qu'**il comprend

   - des moyens de comptabilisation (MCT) aptes à comptabiliser un nombre entier prédéterminé de lignes vidéo après chaque occurrence d'une impulsion de synchronisation verticale et à délivrer un signal de fin de comptabilisation,
   - des moyens de détermination (MDT) aptes à déterminer respectivement les valeurs successives de la phase horizontale du signal , lors des délivrances successives du signal de fin de comptabilisation,
   - un premier registre (RG1) contenant un bit de parité (F),
   - des moyens de mise à jour (MMJ) aptes à mettre à jour les valeurs successives du bit de parité (F) en fonction des valeurs successives de la phase horizontale, et
   - des moyens de traitement (MT) aptes à fournir des indications sur la parité des trames à partir des valeurs successives du bit de parité.

6. Dispositif selon la revendication 5, **caractérisé par le fait que** les moyens de traitement (MT) comportent

   - un compteur de parité (CTP) initialisable à la valeur zéro,
   - un deuxième registre (RG2) apte à contenir un bit de parité arbitraire,
   - des moyens (MCH) aptes à changer la valeur courante du bit de parité arbitraire (FA) à chaque occurrence d'une impulsion de synchronisation verticale,
   - des moyens de comparaison (CMP) aptes à comparer la valeur courante du bit de parité arbitraire avec la valeur du bit de parité déterminée à la trame précédente, et
   - des moyens de commande (MCD) aptes à incrémenter ou à décrémenter la valeur du compteur en fonction de ladite comparaison, l'indication de parité de la trame courante étant la valeur courante du bit de parité arbitraire ou bien la valeur courante complémentée de ce bit de parité arbitraire en fonction du signe de la valeur courante du compteur.

7. Dispositif selon la revendication 6, **caractérisé par le fait que** le compteur de parité (CTP) possède une valeur positive de butée de comptage et une valeur négative de butée de comptage, et **par le fait que** lorsque le compteur atteint sa valeur négative de butée de comptage, les moyens de commande ne modifient pas la valeur du compteur en présence d'une nouvelle commande de décrémentation, tandis que lorsque le compteur atteint sa valeur positive de butée de comptage, les moyens de commande ne modifient pas la valeur du compteur en présence d'une nouvelle commande d'incrémentation.

8. Dispositif selon la revendication 6 ou 7, **caractérisé par le fait que** les moyens de commande (MCD) réinitialisent la valeur du compteur à zéro à chaque perte de synchronisation verticale.

9. Dispositif selon l'une des revendications 5 à 8, **caractérisé par le fait que** les moyens de comptabilisation comportent un compteur (MCT) incrémenté au rythme d'un signal d'horloge, le signal de fin de comptabilisation étant délivre lorsque le compteur atteint une valeur de comptage correspondant au produit dudit nombre entier prédéterminé de lignes vidéo par la durée moyenne d'une ligne vidéo contenue dans le filtre de boucle (FB) d'une boucle à verrouillage de phase numérique (PLL) utilisée pour la synchronisation horizontale.

**10.** Circuit intégré comportant un dispositif selon l'une des revendications 5 à 9.

**11.** Circuit intégré selon la revendication 10, **caractérisé par le fait qu'**il comprend en outre des moyens d'échantillonnage (CAN) du signal vidéo et des moyens de synchronisation horizontale d'un signal de référence (SRF) sur le signal vidéo, ces moyens de synchronisation horizontale (MSH) comportant un filtre passe-bas (LPF) connecté aux moyens d'échantillonnage, des moyens de seuillage (MSE) connectés au filtre de façon à ne laisser subsister que des impulsions dont le niveau est inférieur à un seuil, et des moyens de sélection (MSL) aptes à effectuer une sélection en fonction d'un critère de sélection prédéterminé, parmi les impulsions résiduelles situées à l'intérieur d'une fenêtre d'observation centrée sur chaque transition du signal de référence, de celle qui correspond à ladite impulsion de synchronisation horizontale.

FIG.1

EP 1 309 183 A2

FIG.2

# FIG.3

VSYNC

| 33 | Modification RG2 | Mise à jour RG1 après n lignes | 34 |

FA

30 CTP > 0 ?

NON

OUI

35 Comparaison ← F ← RG1

31 Envoi de $\overline{FA}$

32 Envoi de FA

36 FA $\overset{?}{=}$ F

NON

OUI

37 CTP -1

38 CTP +1

EP 1 309 183 A2

## FIG.4

CVBS → CAN → SN → LPF → SNF → MSE → SNS → MSL → IMPS → ⊗ (CMPH) → ERR → FB → OSC → SRF

MSH

PLL